Europäisches Patentamt

European Patent Office

Office européen des brevets

(11) Publication number: **0 115 160**
A2

# (12) EUROPEAN PATENT APPLICATION

(21) Application number: 83307773.8

(22) Date of filing: 20.12.83

(51) Int. Cl.³: **B 24 D 3/28**
C 08 J 5/14, C 08 F 20/36

(30) Priority: 03.01.83 US 455356

(43) Date of publication of application:
08.08.84 Bulletin 84/32

(84) Designated Contracting States:
BE DE FR GB IT NL

(71) Applicant: MOBIL OIL CORPORATION
150 East 42nd Street
New York New York 10017(US)

(72) Inventor: Guarino, John Philip
71 Stonicker Drive
Lawrenceville New Jersey 08648(US)

(72) Inventor: Roller, Mark Bertram
9 Quince Place
North Brunswick New Jersey 08902(US)

(72) Inventor: Nagy, Frank Andrew
RD 5, Box 126 Old Clinton Road
Flemington New Jersey 08822(US)

(74) Representative: West, Alan Harry
Mobil Court 3 Clements Inn
London WC2A 2EB(GB)

(54) Abrasives with binder comprising adduct of polyisocyanate and polyalkoxyacrylate.

(57) Abrasive articles in which the binder is a cured composition comprising the polyacrylic adduct of a polyisocyanate and a poly(lower-alkoxy) ester of acrylic or methacrylic acid, N-vinylpyrrolidone and optionally a resinous polyacrylate cross-linking agent.

EP 0 115 160 A2

## ABRASIVES WITH BINDER COMPRISING ADDUCT
## OF POLYISOCYANATE AND POLYALKOXYACRYLATE

Abrasive articles such as abrasives coated on cloth or paper substrates use polymeric binding agents to hold the abrasive particles to the substrate. A variety of suitable binders have been used, many of which are based on phenolic resins, polyurethane resins, and alkyd resins. However, the prior art binders suffer various deficiencies. For example, binders based on phenolic resins tend to decompose with heat under conditions of abrasive use and give off noxious fumes. Other binders exhibit difficulty in obtaining adequate cure in a reasonable time. The binders of this invention exhibit excellent heat stability during use and are easily curable by radiation such as electron beam.

The abrasive compositions of this invention comprise abrasive particles and a cured binder, which in uncured form comprises the polyacrylic adduct of a polyisocyanate and a poly(lower-alkoxy) ester of acrylic acid or methacrylic acid. These adducts are used alone or preferably in compositions which include N-vinylpyrrolidone. The compositions may further contain a resinous polyacrylic cross-linking agent such as the adduct of acrylic acid and a bisphenol-A epoxy resin.

The polyacrylic adducts of a polyisocyanate and a poly(lower-alkoxy) ester of acrylic acid or methacrylic acid are disclosed in U.S. Patent No. 4,126,527. The preferred adducts are prepared from hydroxyethyl acrylic acid which is adducted with 1 to 5 moles of propylene oxide, most preferably 2 moles of propylene oxide, and then reacted with an organic polyisocyanate. The lower-alkoxy groups in the ester of acrylic acid or methacrylic acid can contain from 1 to 4 carbon atoms but as indicated, the propylene oxide adducts of hydroxy ethyl acrylate are particularly preferred.

The polyisocyanate used to prepare the adduct is preferably an aromatic polyisocyanate such as toluene diisocyanate.

The compositions used as binders in accordance with this invention advantageously contain N-vinylpyrrolidone, in addition to the necessary polyacrylic adduct of a polyisocyanate. The amount of N-vinylpyrrolidone is generally up to 20 percent by weight of the polyacrylic adduct.

Particularly desired compositions are obtained by including a resinous polyacrylic cross-linking agent with the polyacrylic adduct of a polyisocyanate and N-vinylpyrrolidone. Compositions of this type are found to give a desirably high glass transition temperature (Tg) of at least 70°C. For especially good performance of the abrasive article the cured binder should have a glass transition temperature of at least 85°C.

Desirable glass transition temperatures above 70°C can be obtained with compositions which comprise 50 to 90 weight percent of the polyacrylic adduct of a polyisocyanate; 5 to 20 weight percent of N-vinylpyrrolidone; and 0 to 40 weight percent of a resinous polyacrylic cross-linking agent.

The resinous polyacrylic cross-linking agent can be any one of a variety of resinous materials containing at least two polymerizable acrylic groups. Polyacrylic epoxy resins, in particular those which comprise the adduct of acrylic acid or a methacrylic acid and an epichlorohydrin-bisphenol A-epoxy resin have been found to be highly suitable in the practice of this invention.

The invention is illustrated by the following non-limiting examples.

## EXAMPLE 1

The following composition was prepared and cross-linked with electron beam radiation and found to have a Tg of 78°C.

85 parts by weight of toluene diisocyanate adducted with hydroxy ethyl acrylate which had been adducted with 2 moles of propylene oxide. The product contained excess of the hydroxy ethyl acrylate propylene oxide adduct in the amount of 10 percent; and

15 weight percent of N-vinylpyrrolidone.

## EXAMPLE 2

A composition similar to that of Example 1 was prepared in which a resinous polyacrylic cross-linking agent was added. The resinous cross-linking agent was the adduct of 2 moles of acrylic acid and Epon 828, a low molecular weight epichlorohydrin-Bisphenol A epoxy resin. This composition had a Tg of 94°C.

The composition comprised

65 weight percent of the polyacrylic adduct of toluene diisocyanate used in Example 1;

15 weight percent of N-vinylpyrrolidone; and

20 weight percent of the epoxy diacrylate described above.

F-2076                            -4-

CLAIMS:

1. An abrasive article comprising abrasive particles and a cured binder, which in uncured form comprises the polyacrylic adduct of a polyisocyanate and a poly(lower-alkoxy) ester of acrylic acid or methacrylic acid.

2. The article of claim 1 in which the ester is an ester of acrylic acid.

3. The article of claim 1 in which the ester is an adduct of 1 to 5 moles of propylene oxide and 1 mole of hydroxyethyl acrylate.

4. The article of claim 3 in which the polyisocyanate is toluene diisocyanate, and which binder comprises in addition, up to 20 weight percent polypropoxy adduct of hydroxyethylacrylate based on the polyacrylic adduct.

5. The article of claim 1 in which the ester is an adduct of 2 moles of propylene oxide and 1 mole of hydroxyethyl acrylate.

6. The article of any preceding claim in which uncured binder includes up to 20 weight percent of N-vinylpyrrolidone based on the weight of the polyacrylic adduct.

7. The article of claim 1 in which the uncured binder comprises
       50 to 90 weight percent of the polyacrylic adduct of a
polyisocyanate;
       5 to 20 weight percent of N-vinylpyrrolidone; and
       0 to 40 weight percent of a resinous polyacrylic
cross-linking agent.

8. The article of claim 7 in which the resinous polyacrylic cross-linking agent is an adduct of acrylic acid and a epichlorohydrin-bisphenol A epoxy resin.

9. The article of any preceding claim in which the cured binder has a Tg of at least 70°C.

10. The article of claim 9 in which the cured binder in cured form has a Tg of at least 85°C.

11. A composition of matter comprising

50 to 90 weight percent of the polyacrylic adduct of a polyisocyanate and a poly(lower-alkoxy) ester of acrylic acid or of methacrylic acid;

5 to 20 weight percent of N-vinyl pyrrolidone; and

0 to 40 weight percent of a resinous polyacrylic cross-linking agent.

12. The composition of claim 11 in which the ester is an ester of acrylic acid.

13. The composition of claim 11 in which the ester is an adduct of 1 to 5 moles of propylene oxide and 1 mole of hydroxyethyl acrylate.

14. The composition of claim 13 in which the polyisocyanate is toluene diisocyanate, and which binder comprises up to 20 weight percent polypropoxy adduct of hydroxyethylacrylate based on the polyacrylic adduct.

15. The composition of claim 11 in which the ester is an adduct of 2 moles of propylene oxide and 1 mole of hydroxyethyl acrylate.

16. The composition of claims 11-15 in which the resinous polyacrylic cross-linking agent is an adduct of acrylic acid and a epichlorohydrin-bisphenol A epoxy resin.